# EUROPÄISCHE PATENTANMELDUNG

(11) **EP 4 707 754 A2**
(43) Veröffentlichungstag der Anmeldung: **11.03.2026**
(21) Anmeldenummer: 26152185.0
(22) Anmeldetag: 23.04.2021
(51) Int. Cl.: G01F 15/18

(54) **MESSAUFNEHMER EINES CORIOLIS-DURCHFLUSSMESSGERÄTES UND CORIOLIS-DURCHFLUSSMESSGERÄT**

(30) Priorität: 29.05.2020 DE 102020114518
(62) Teilanmeldung aus: 21722166.2
(71) Anmelder: Endress+Hauser Flowtec AG, 4153 Reinach (CH)
(72) Erfinder: Schwenter, Benjamin, 4107 Ettingen (CH)
(74) Vertreter: Endress + Hauser Group Services (Deutschland) AG+Co. KG

(57) **Zusammenfassung**

Die Erfindung betrifft einen Messaufnehmer (1) eines Coriolis-Durchflussmessgerätes (2), umfassend:
- eine Messrohranordnung (4), wobei die Messrohranordnung (4) mindestens ein Messrohr (3) aufweist, wobei das mindestens eine Messrohr (3) einen Einlaufabschnitt und einen Auslaufabschnitt aufweist;
- mindestens eine erste Erregerkomponente eines Schwingungserregers (7);
- mindestens eine erste Sensorkomponente eines Schwingungssensors (8);
- eine Fixierkörperanordnung (5), wobei die Fixierkörperanordnung (5) mit dem mindestens einen Messrohr (3) im Einlaufabschnitt und/oder im Auslaufabschnitt verbunden ist, wobei die Fixierkörperanordnung (5) mindestens eine Öffnung (70) aufweist; und
- eine Verbindungsvorrichtung (63) zum lösbaren Verbinden der Messrohranordnung (4) mit einer Prozessleitung (22), wobei die Verbindungsvorrichtung (63) mindestens eine Verschlussvorrichtung (71) aufweist, welche sich durch die Öffnung (70) der Fixierkörperanordnung (71) erstreckt, wobei die Verbindungsvorrichtung (5) über die Verschlussvorrichtung (71) zumindest formschlüssig mit der Fixierkörperanordnung (5) verbunden ist, wobei die Verbindungsvorrichtung (63) einen Verbindungsvorrichtungskörper aufweist, der einen Kunststoff, bevorzugt Polyetheretherketone (PEEK), Polyaryletherketone (PAEK), Polyphenylsulfone (PPSU), Polyethersulfone (PESU), Polysulfone (PSU), Polyarylamide (PARA), Polypropylene (PP), Polycarbonate (PC), Polyethylene (PE), Fluoropolymere und/oder Hart-Polyethylene (HDPE), aufweist, wobei die Messrohranordnung (4) einen Messrohranordnungskörper aufweist, der Stahl aufweist und ein Coriolis-Durchflussmessgerät (2).

## Beschreibung

Die Erfindung betrifft einen Messaufnehmer eines Messgerätes zum Erfassen eines Massedurchflusses, einer Viskosität, einer Dichte und/oder einer davon abgeleiteten Größe eines fließfähigen Mediums und ein Messgerät zum Erfassen eines Massedurchflusses, einer Viskosität, einer Dichte und/oder einer davon abgeleiteten Größe eines fließfähigen Mediums, insbesondere ein Coriolis-Durchflussmessgerät für bevorzugt biopharmazeutische Anwendungen.

Feldgeräte der Prozessmesstechnik mit Messaufnehmern vom Vibrationstyp und besonders Coriolis-Durchflussmessgeräte sind seit vielen Jahren bekannt. Der grundsätzliche Aufbau eines solchen Messgerätes wird beispielsweise in der EP 1 807 681 A1 beschrieben, wobei auf den Aufbau eines gattungsgemäßen Feldgeräts im Rahmen der vorliegenden Erfindung auf diese Druckschrift vollumfänglich Bezug genommen wird.

Typischerweise weisen Coriolis-Durchflussmessgeräte zumindest ein oder mehrere schwingfähige Messrohre auf, welche mittels eines Schwingungserregers in Schwingung versetzt werden können. Diese Schwingungen übertragen sich über die Rohrlänge und werden durch die Art des im Messrohr befindlichen fließfähigen Mediums und dessen Durchflussgeschwindigkeit beeinflusst. Ein Schwingungssensor oder insbesondere zwei in Fließrichtung voneinander beabstandete Schwingungssensoren können die Schwingungen in Form eines Messsignals oder mehrerer Messsignale aufnehmen. Aus dem Messsignal oder den Messsignalen kann eine Auswerteeinheit sodann den Massedurchfluss, die Viskosität,die Dichte und/oder eine davon abgeleitete Größe des fließfähigen Mediums ermitteln.

Es sind Coriolis-Durchflussmessgeräte mit austauschbaren Einweg-Messrohranordnungen bekannt. So wird beispielsweise in der WO 2011/099989 A1 ein Verfahren zur Herstellung einer monolithisch ausgebildeten Messrohranordnung eines Coriolis-Durchflussmessgerätes mit gebogenen Messrohren gelehrt, wobei der Messrohrkörper der jeweiligen Messrohre zuerst massiv aus einem Polymer gebildet und der Kanal zum Führen des fließfähigen Mediums anschließend spannend eingearbeitet wird. Die WO 2011/099989 A1 lehrt - ebenso wie die US 10,209,113 B2 - einen Verbindungskörper, welcher dazu eingerichtet ist die auswechselbare Messrohranordnung aufzunehmen und zu stützen. Beide Dokumente offenbaren jedoch nicht wie die Einweg-Messrohranordnung an ein Schlauch- und/oder Kunststoffrohrsystem anschließbar ist. Ausgehend vom dargelegten Stand der Technik liegt der Erfindung die Aufgabe zugrunde, eine Lösung für den Anschluss des Messaufnehmers an ein Schlauch- und/oder Kunststoffrohrsystem bereitzustellen.

Des Weiteren liegt die Aufgabe zugrunde, ein Messgerät mit einem entsprechenden Messaufnehmer bereitzustellen.

Die Aufgaben werden gelöst durch den Messaufnehmer nach Anspruch 1 und das Messgerät nach Anspruch 14. Vorteilhafte Ausgestaltung der Erfindung sind Gegenstand der Unteransprüche.

Der erfindungsgemäße Messaufnehmer eines Messgerätes zum Erfassen eines Massedurchflusses, einer Viskosität, einer Dichte und/oder einer davon abgeleiteten Größe eines fließfähigen Mediums, umfasst:
- eine Messrohranordnung zum Führen des fließfähigen Mediums,
   wobei die Messrohranordnung mindestens ein Messrohr aufweist,
   wobei das mindestens eine Messrohr einen Einlaufabschnitt und einen Auslaufabschnitt aufweist;
- mindestens eine erste Erregerkomponente eines Schwingungserregers zum Anregen des mindestens einen Messrohres in Schwingungen,
   wobei die mindestens eine Erregerkomponente an dem mindestens einen Messrohr angeordnet ist;
- mindestens eine erste Sensorkomponente eines Schwingungssensors zum Erfassen der Schwingungen des mindestens einen Messrohres,
   wobei die mindestens eine erste Sensorkomponente an dem mindestens einen Messrohr angeordnet ist;
- eine Fixierkörperanordnung,
   wobei die Fixierkörperanordnung mit dem mindestens einen Messrohr im Einlaufabschnitt und/oder im Auslaufabschnitt verbunden ist,
   wobei die Fixierkörperanordnung mindestens eine Öffnung aufweist; und
- eine Verbindungsvorrichtung zum lösbaren Verbinden der Messrohranordnung mit einer Prozessleitung,
   wobei die Verbindungsvorrichtung Rohranschlussöffnungen aufweist, an welche die Messrohranordnung angeschlossen ist,
   wobei die Verbindungsvorrichtung mit dem mindestens einem Messrohr im Einlaufabschnitt und/oder im Auslaufabschnitt verbunden ist,
   wobei die Verbindungsvorrichtung mindestens eine Verschlussvorrichtung aufweist, welche sich durch die Öffnung der Fixierkörperanordnung erstreckt,
   wobei die Verbindungsvorrichtung über die Verschlussvorrichtung zumindest formschlüssig mit der Fixierkörperanordnung verbunden ist.

Erfindungsgemäß dient die Verbindungsvorrichtung als Adapter zum Verbinden der Messrohranordnung an ein Schlauch- und/oder Kunststoffrohrsysteme mit variablen Nennweiten. Somit kann die Messrohranordnung unabhängig von den Schlauch- und/oder Kunststoffrohrsystem hergestellt und bei Bedarf über einen für das Schlauch- und/oder Kunststoffrohrsystem vorgesehenen Verbindungsvorrichtung über entsprechende Prozessanschlüsse mit dem Schlauch- und/oder Kunststoffrohrsystem verbunden werden.

Die Verbindungsvorrichtung kann aus einem Werkstoff gebildet sein, welcher Stahl, Kunststoff, Keramik und/oder Glas aufweist.

Die Messrohre umfassen jeweils einen Messrohrkörper, welcher aus einem Werkstoff gebildet ist, der Metall, insbesondere Stahl, Kunststoff, Glas und/oder Keramik aufweist. Die Messrohre sind mindestens einmal gebogen. Vorzugsweise ist eine Grundform des Messrohrkörpers U-förmig ausgebildet. Es sind jedoch auch andere Formen mit mindestens einem Bogen bekannt, welche auch unter dem Schutzumfang der Erfindung fallen.

Der mindestens eine Schwingungserreger umfasst üblicherweise mindestens einen Erregermagneten und mindestens eine Erregerspule zum Erzeugen eines zeitlich veränderlichen Magnetfeldes. Der Erregermagnet ist an dem, in Schwingungen anzuregenden Messrohr angeordnet. Die Erregerspule kann an einem weiteren Messrohr oder an einer Trägervorrichtung angeordnet sein, in welche das Messrohr bzw. der Messaufnehmer eingesetzt wird und die dazu dient, den Messaufnehmer vor Störungseinflüssen abzuschirmen und/oder die elektronischen Komponenten des Messgerätes, wie Mess-, Betriebs- und/oder Auswerteschaltung unterzubringen. Die Messrohranordnung kann zudem einen eindeutige Identifikator aufweisen, beispielsweise in Form eines QR-Codes und/oder eines RFID-Tags. Der Identifikator kann Informationen bzgl. des Nullpunktes und/oder des Kalibrationsfaktors aufweisen mit deren Hilfe die Auswerteschaltung eine korrigierte Messgröße ermittelt.

Der mindestens eine Schwingungssensor umfasst in der Regel mindestens einen Sensormagneten und eine Sensorspule zum Erfassen eines zeitlich veränderlichen Magnetfeldes. Der Sensormagnet ist an einem, in Schwingungen zu versetzenden Messrohr angeordnet. Die Sensorspule kann an einem weiteren in Schwingungen zu versetzenden Messrohr oder an der Trägervorrichtung des Messgerätes angeordnet sein.

Durch den Formschluss zwischen Verbindungsvorrichtung und Fixierkörperanordnung ist ein Verbinden der beiden Bauteile ohne zusätzliches Werkzeug möglich. Die Verbindung zwischen der Fixierkörperanordnung und der Verbindungsvorrichtung kann so ausgestaltet sein, dass ein Lösen der Verbindung nur durch Abbrechen bzw. Abtrennen der Verschlussvorrichtung von der Verbindungsvorrichtung möglich ist. Zudem kann die Öffnung und die Verschlussvorrichtung derart ausgebildet sein, dass eine fehlerhafte Zuordnung zwischen Verschlussvorrichtung und Messrohranordnung vorgebeut wird.

Eine Ausgestaltung sieht vor, dass die Fixierkörperanordnung ein erste Seite und eine zweite Seite aufweist,
wobei die erste Seite und die zweite Seite einander abgewandt sind,
wobei sich die Öffnung von der ersten Seite zur zweiten Seite erstreckt,
wobei die Verbindungsvorrichtung eine Kontaktfläche aufweist,
wobei die Fixierkörperanordnung an der ersten Seite eine Berührfläche aufweist,
wobei sich die Kontaktfläche und die Berührfläche berühren,
wobei die Verbindungsvorrichtung über die Verschlussvorrichtung eine Kraft auf die Fixierkörperanordnung bewirkt mit einem Kraftanteil in Richtung der zweiten Seite.

Der zusätzlich zu der formschlüssigen Verbindung in Richtung der zweiten Seite wirkende Kraftanteil erschwert das Lösen der Verbindung.

Die Verschlussvorrichtung ist derart ausgebildet, dass sie sich beim Durchführen durch die Öffnung bis zu einem Punkt elastisch verformt und dann einrastet, um somit die formschlüssige Verbindung zu bilden.

Eine Ausgestaltung sieht vor, dass die Verschlussvorrichtung eine Rastnase umfasst.

Eine Ausgestaltung sieht vor, dass zwischen Verbindungsvorrichtung und der zweiten Seite des Fixierkörperanordnung ein, insbesondere elastische Dichtung angeordnet ist,
wobei die Dichtung zwischen Verbindungsvorrichtung und Fixierkörperanordnung eingespannt ist und die Einspannung über den Formschluss gehalten wird.

Beim Zusammenführen der Verbindungsvorrichtung mit der Fixierkörperanordnung wird die Dichtung verformt. Diese tendiert jedoch dahin aufgrund ihrer elastischen Eigenschaften in ihre Ursprungsform zurückzukehren. Dies bewirkt eine Kraft zwischen Verschlussvorrichtung und Fixierkörperanordnung in Richtung der zweiten Seite.

Eine Ausgestaltung sieht vor, dass die Verbindungsvorrichtung zwei Verschlussvorrichtungen aufweist,
wobei die Fixierkörperanordnung zwei Öffnungen aufweist,
wobei sich die zwei Verschlussvorrichtungen jeweils durch eine Öffnung der zwei Öffnungen erstrecken,
wobei die Verbindungsvorrichtung über die zwei Verschlussvorrichtung jeweils eine Kraft auf die Fixierkörperanordnung bewirkt mit einem Kraftanteil in Richtung der zweiten Seite.

Eine Ausgestaltung sieht vor, dass die Messrohranordnung zwei insbesondere zueinander parallel verlaufende Messrohre aufweist,
wobei die zwei Messrohr jeweils im Einlaufabschnitt einen Einlauf mit einer Einlaufrichtung und im Auslaufabschnitt einen Auslauf mit einer Auslaufrichtung aufweisen,
wobei die mindestens zwei Messrohre zwischen Einlaufabschnitt und Auslaufabschnitt mindestens einmal, insbesondere genau einmal gebogen sind,
wobei die Einlaufrichtung und die Auslaufrichtung entgegengesetzt orientiert sind,
wobei die Fixierkörperanordnung mit dem Einlaufabschnitt und dem Auslaufabschnitt der jeweiligen Messrohre verbunden ist.

Eine Ausgestaltung sieht vor, dass die Verbindungsvorrichtung einen Einlaufkanal aufweist,
wobei der Einlaufkanal dazu ausgebildet ist, mindestens einen Einlauf und bevorzugt die Einläufe aller Messrohre mit der Prozessleitung zu verbinden,
wobei die Verbindungsvorrichtung einen Auslaufkanal aufweist,
wobei der Auslaufkanal dazu ausgebildet ist, mindestens einen Auslaufabschnitt und bevorzugt die Auslaufabschnitte aller Messrohre mit der Prozessleitung zu verbinden.

Gemäß der Ausgestaltung übernimmt die Verbindungsvorrichtung die Funktion eines Verteilerstückes, d.h. er teilt einen Kanal in zwei getrennte Kanäle auf. Dadurch, dass Verbindungsvorrichtung und Messrohranordnung zwei getrennte Komponenten sind, ist es möglich die Geometrie und Form der Messrohre unabhängig von der Form und Geometrie der Verbindungsvorrichtung auszugestalten bzw. zu optimieren.

Eine Ausgestaltung sieht vor, dass die Verbindungsvorrichtung einen Verbindungskanal aufweist, welcher den Einlaufabschnitt eines ersten Messrohres mit dem Auslaufabschnitt eines zweiten Messrohres verbindet.

Das zu führende Medium strömt durch den Einlaufkanal der Verbindungsvorrichtung in den Einlauf des ersten Messrohres. Von dort aus fließt es durch den Messrohrkanal des ersten Messrohres bis es zum Auslauf gelangt und über den Verbindungskanal zum Einlauf eines zweiten Messrohres geleitet wird, wo es durch den Messrohrkanal zum Auslauf strömt. Von Auslauf des zweiten Messrohres wird es dann über den Auslaufkanal der Verbindungsvorrichtung in die angeschlossene Rohrleitung bzw. in das angeschlossene Schlauchsystem geleitet.

Vorteilhaft an der Ausgestaltung ist, dass sich der Messbereich im Vergleich zu Messaufnehmern, bei denen das strömende Medium in der Verbindungsvorrichtung getrennt wird, verschiebt. Somit können durch identische Messrohranordnungen mit unterschiedlichen Verbindungsvorrichtungen, ein größerer Messbereich abgedeckt werden. Dies vereinfacht nicht nur die Herstellung von Messaufnehmern, sondern reduziert auch die Herstellungskosten.

Vorteilhaft an der Ausgestaltung ist, dass für die Messrohranordnung in Verbindung mit der Verbindungsvorrichtung keine erneute Ermittlung des Kalibrationsfaktors und des Nullpunktes notwendig ist.

Der Verbindungskanal ist mediumsführend ausgebildet und somit auch mediumsberührend. Der Verbindungskanal weist vorzugsweise mindestens einen Bogen auf. Die Verbindungsvorrichtung ist vorzugsweise monolithisch ausgebildet. Eine derartige Form ist nicht entformbar und daher nicht mittels eines herkömmlichen Urform-Fertigungsverfahrens wie beispielsweise Spritzgießen realisierbar.

Eine derartige Verbindungsvorrichtung kann alternativ durch ein additives oder spanendes Fertigungsverfahren realisiert werden. Der Verbindungskanal kann in eine massive Verbindungsvorrichtung gebohrt werden und anschließend mit Blindstopfen teilweise abgedichtet werden.

Eine Ausgestaltung sieht vor, dass die Verbindungsvorrichtung einen Verbindungskanal aufweist, welcher den Einlauf eines der mindestens zwei Messrohre mit dem zum Messrohr gehörigen Auslauf verbindet.

Eine Ausgestaltung sieht vor, dass die Verbindungsvorrichtung eine erste Vertiefung aufweist, welche komplementär zum Einlauf eines der mindestens zwei Messrohre ausgebildet ist,
wobei die Verbindungsvorrichtung eine zweite Vertiefung aufweist, welche komplementär zum Auslaufabschnitt eines der mindestens zwei Messrohre ausgebildet ist,
wobei der Einlaufabschnitt und der Auslaufabschnitt eines der mindestens zwei Messrohre in der jeweiligen zugeordneten Vertiefung angeordnet sind.

Die beiden zuvor genannten Ausgestaltungen beschreiben zwei Möglichkeiten eines Messrohr der beiden Messrohre der Messrohranordnung vom Durchfluss zu trennen, so dass das Medium ausschließlich durch eines der beiden Messrohre geführt wird. Die erste Vertiefung und die zweite Vertiefung sind als Sackloch ausgebildet. Somit kann eine Messrohranordnung mit zwei Messrohren auch in einem Einrohr-Coriolis-Durchflussmessgerät eingesetzt werden.

Erfindungsgemäß ist vorgesehen, dass die Verbindungsvorrichtung einen Verbindungsvorrichtungskörper aufweist,
wobei die Verbindungsvorrichtungskörper einen Kunststoff und bevorzugt Polyetheretherketone, Polyaryletherketone, Polyphenylsulfone, Polyethersulfone, Polysulfone, Polyarylamide, Polypropylene, Polycarbonate, Polyethylene, Fluoropolymere und/oder Hart-Polyethylene aufweist,
wobei die Messrohranordnung einen Messrohranordnungskörper aufweist,
wobei der Messrohranordnungskörper Stahl aufweist.

Es existiert eine Nachfrage an Messgeräten mit Einweg-Messrohren bzw. Einweg-Messrohranordnungen für biopharmazeutische Anwendungen. Dafür müssen die Materialien, welche in Kontakt mit dem Medium kommen biokompatibel und gammasterilisierbar sein. Es ist daher besonders vorteilhaft, wenn das Messrohr aus einem der oben genannten Materialien hergestellt ist, da diese die biopharmazeutischen Anforderungen erfüllen. Die genannten Kunststoffe eignen sich zudem als Vergussmasse in einem Spritzgussverfahren zur Herstellung der Verbindungsvorrichtung.

Es ist vorteilhaft, wenn sich der Werkstoff des Messrohranordnungskörpers von dem Werkstoff des Verbindungsvorrichtungskörpers unterscheidet. Somit kann das Gesamtgewicht des Messaufnehmers reduziert werden. Die Messrohre können vorzugsweise aus Stahl gebildet sein und die Verbindungsvorrichtung aus Kunststoff.

Eine Ausgestaltung sieht vor, dass die Messrohranordnung genau zwei Messrohre umfasst.

Eine Ausgestaltung sieht vor, dass die Verbindungsvorrichtung einen, bevorzugt am Verbindungskanal angeordneten Temperatursensor aufweist.

Der Vorteil dieser Ausgestaltung liegt darin, dass ein Temperaturmessung in einem Bereich der Messrohranordnung möglich ist, welcher mechanisch von den Schwingenden Messrohren entkoppelt ist. Somit wird auch die Verbindung zwischen Temperatursensor und Verbindungsvorrichtung weniger beansprucht. Des Weiteren sind genauere Temperaturmessungen möglich.

Der Temperatursensor umfasst ein Widerstandsthermometer, Thermoelement, Temperaturfühler mit Schwingquarz und/oder Halbleiter-Temperatursensor.

Gemäß einer Ausgestaltung ist die Messrohranordnung an einem Schlauch- und/oder Kunststoffrohrsystem angeschlossen, vorzugsweise zur Durchflussmessung bei automatisierten industriellen oder labortechnischen Anlagen.

Gemäß einer Ausgestaltung ist der Messaufnehmer, umfassend die Messrohranordnung, die Verbindungsvorrichtung und Komponenten des Schwingungserregers und -sensors, und das Schlauch- und/oder Kunststoffrohrsystem in einem Behälter, insbesondere einem Sterilisationsbeutel angeordnet, welcher dazu ausgebildet ist eine Sterilität der Messrohranordnung und des Schlauch- und/oder Kunststoffrohrsystems bis zum Öffnen des Behälters aufrechtzuerhalten, wobei das Messrohrsystem mittels Strahlensterilisation, vorzugsweise Gammastrahlensterilisation oder Elektronenstrahlensterilisation, Heißdampfsterilisation und/oder Gassterilisation sterilisiert ist.

Gemäß einer Ausgestaltung ist mindestens eine Prozessüberwachungseinheit an das Schlauch- und/oder Kunststoffrohrsystem angeschlossen, wobei die Prozessüberwachungseinheit einen Druckmesswandler, Temperatursensor, eine Waage, einen pH-Sensor, einen Dichtesensor, ein Durchflussmessgerät zur Ermittlung eines Massedurchflusses, eines Volumendurchflusses und/oder einer Durchflussgeschwindigkeit, einen Durchflussschalter, einen Füllstandssensor, einen Leitfähigkeitssensor, einen Konzentrationssensor, einen Sauerstoffsensor und/oder einen Trübungssensor umfasst.

Das erfindungsgemäße Messgerät zum Erfassen eines Massedurchflusses, einer Viskosität, einer Dichte und/oder einer davon abgeleiteten Größe eines fließfähigen Mediums, umfasst:
- eine Trägervorrichtung;
- einen Messaufnehmer nach mindestens einem der vorhergehenden Ansprüche;
- mindestens eine zweite Erregerkomponenten des Schwingungserregers; und
- mindestens eine zweite Sensorkomponente des Schwingungssensors;
   wobei die Trägervorrichtung einen Trägervorrichtungskörper mit einer Aufnahme aufweist,
   wobei der Messaufnehmer in der Aufnahme angeordnet und mechanisch trennbar mit dem Trägervorrichtungskörper verbunden ist;
   wobei die zweite Erregerkomponente an dem Trägervorrichtungskörper angeordnet ist,
   wobei die zweite Sensorkomponente an dem Trägervorrichtungskörper angeordnet ist,
   wobei der Schwingungserreger eine Betriebsschaltung umfasst, welche mit zumindest einer Erregerkomponente, insbesondere der zweiten Erregerkomponente des mindestens einen Schwingungserregers verbunden ist,
   wobei der Schwingungssensor eine Messschaltung umfasst, welche zumindest mit einer Sensorkomponente, insbesondere der zweiten Sensorkomponente des mindestens einen Schwingungssensors elektrisch verbunden ist.

Die Erfindung wird anhand der nachfolgenden Figuren näher erläutert. Es zeigt:
Fig. 1: eine perspektivische Ansicht auf zwei Ausgestaltungen des erfindungsgemäßen Messaufnehmers;
Fig. 2: zwei perspektivische Ansichten auf eine weitere Ausgestaltung des Messaufnehmers und der Verbindungsvorrichtung;
Fig. 3: eine teilweise geschnittene Perspektivansicht auf eine Ausgestaltung des Messgerätes;
Fig. 4: einen Teilausschnitt eines Längsschnittes durch den erfindungsgemäßen Messaufnehmer; und
Fig. 5: eine Explosionsansicht einer erfindungsgemäßen Ausgestaltung des Messaufnehmers.

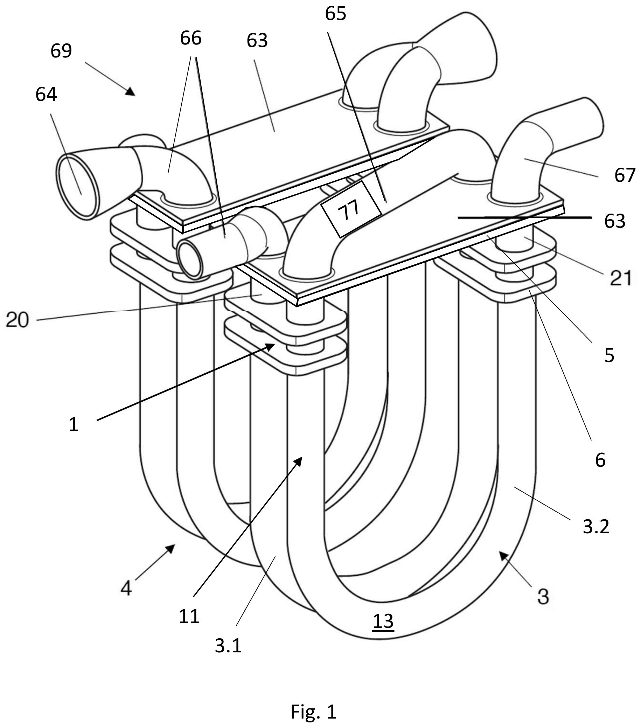

Die Fig. 1 zeigt eine perspektivische Ansicht auf zwei Ausgestaltungen des Messaufnehmers 69. Die erste Ausgestaltung weist eine Messrohranordnung 4 mit einer angeordneten Fixierkörperanordnung 5 auf. Die Messrohranordnung 4 umfasst genau zwei Messrohre 3.1, 3.2, welche über eine Koppleranordnung 1 - umfassend zwei Kopplungselemente 6 im Einlaufabschnitt 20 und zwei Kopplungselemente 6 im Auslaufabschnitt 21 - miteinander mechanisch gekoppelt sind. Die Kopplungselemente 6 dienen dazu einen Oszillator aus den beiden einzeln in Schwingungen angeregten Messrohren 3 zu bilden. Gemäß der abgebildeten Ausgestaltung sind die Kopplungselemente 6 plattenförmig ausgebildet mit abgerundeten Kanten. Es sind jedoch auch andere Formen bekannt. Im Rahmen der Erfindung wird sich weder auf eine Form noch auf eine Anzahl an Kopplungselementen 6 eingeschränkt. Aus Übersichtsgründen sind der Schwingungserreger und die Schwingungssensoren, insbesondere deren einzelnen Komponenten nicht abgebildet. Zwischen Einlaufabschnitt 20 und Auslaufabschnitt 21 weisen die beiden Messrohre 3.1, 3.2 jeweils zwei Schenkel 11 und einen die beiden Schenkel 11 verbindenden Bogen auf, so dass der jeweilige Messrohrkörper 13 U-förmig ist. Eine Fixierkörperanordnung 5 ist an den jeweiligen Enden der Messrohre 3.1, 3.2 angeordnet und verbindet die zwei Messrohre 3.1, 3.2 der Messrohranordnung 4 miteinander. Mit der Fixierkörperanordnung 5 mechanisch verbunden ist eine Verbindungsvorrichtung 63, welche Rohranschlussöffnungen 64 aufweist, an welche in einem angeschlossenen Zustand ein Schlauch- und/oder Kunststoffrohrsystem angeschlossen ist und die als Prozessanschluss ausgebildet sein können. Es sind eine Vielzahl an Prozessanschlüssen, wie z.B. Flansche, Schneidringverschraubungen, Schlauchverschraubungen, Anschlusszapfen etc. bekannt. Die Rohranschlussöffnungen 64 weisen jeweils einen Kanal 66, 67 auf. Gemäß der ersten Ausgestaltung trennt sich der Einlaufkanal 66 in zwei separate Kanäle auf, welche mit dem jeweiligen Einlaufabschnitt 20 der beiden Messrohre 3 verbunden sind. Gleiches gilt auch für den Auslaufkanal 67. Der Auslaufkanal 67 weist zwei Kanäle auf, welche jeweils aus dem Auslaufabschnitt 21 der jeweiligen Messrohre 3 zusammenlaufen und eine der Rohranschlussöffnungen 64 bilden. Die Nennweite der Rohranschlussöffnungen 64 und die Nennweite der Messrohre 3 können unterscheiden. Die Fließrichtung des zu führenden Mediums durch die Rohranschlussöffnung 64 unterscheidet sich von der Fließrichtung des Mediums im Einlauf- und/oder Auslaufabschnitt 20, 21.

Die zweite Ausgestaltung weist eine identische Messrohranordnung 4 wie die erste Ausgestaltung auf und unterscheidet sich ausschließlich durch die Ausgestaltung der Verbindungsvorrichtung 63. Der Einlaufkanal 66 ist mit dem Einlaufabschnitt 20 des ersten Messrohres 3.1 verbunden. Der Auslaufkanal 67 der Verbindungsvorrichtung 5 ist mit dem Auslaufabschnitt 21 des zweiten Messrohres 3.2 verbunden. Ein Verbindungskanal 65 verbindet den Auslaufabschnitt 21 des ersten Messrohres 3.1 mit dem Einlaufabschnitt des zweiten Messrohres 3.2. Die Messrohranordnung 4 weist eine Spiegelebene auf, welche zwischen den beiden Messrohren 3.1, 3.2, parallel zu den jeweiligen Längsachsen der Schenkel 11 verläuft. Der Verbindungskanal 65 weist eine Längsachse auf, welche zur Spiegelebene der Messrohranordnung 4 geneigt ist.

An der Außenwandung des Verbindungskanales 65 ist ein Temperatursensor 77 möglichst nahe an dem zu führenden Medium angeordnet. Der Temperatursensor 77 kann beispielsweise ein Pt100 oder PT1000 Element sein.

Die Verbindungsvorrichtung 63 weist einen Verbindungsvorrichtungskörper auf, welcher einen Kunststoff und bevorzugt Polyetheretherketone (PEEK), Polyaryletherketone (PAEK), Polyphenylsulfone (PPSU), Polyethersulfone (PESU), Polysulfone (PSU), Polyarylamide (PARA), Polypropylene (PP), Polycarbonate (PC), Polyethylene (PE), Fluoropolymere und/oder Hart-Polyethylene (HDPE) aufweist. Zudem weist die Messrohranordnung 4 einen Messrohranordnungskörper auf, der Stahl umfasst und insbesondere aus Stahl gebildet ist.

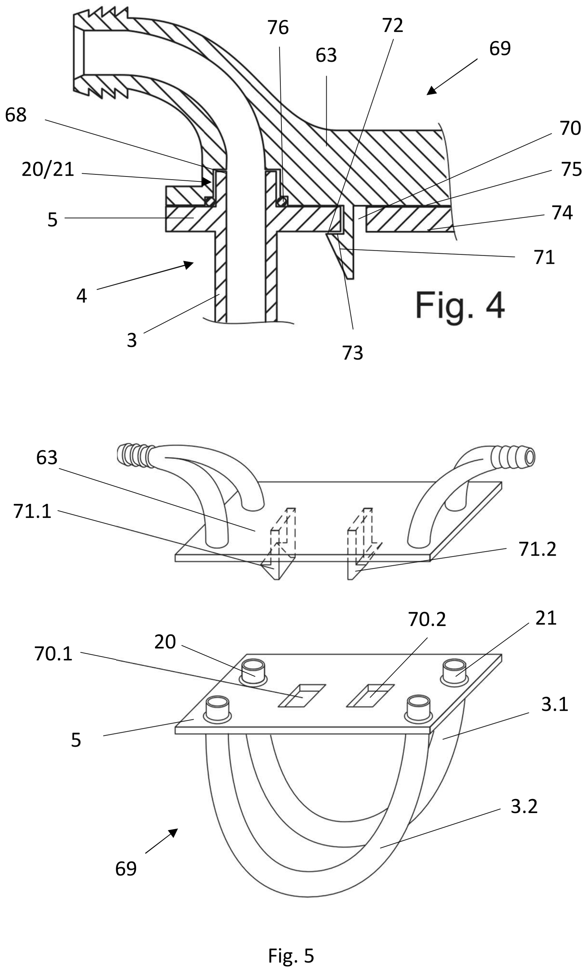

Die Verbindungsvorrichtung 63 ist über eine Verschlussvorrichtung zumindest formschlüssig mit der Fixierkörperanordnung 5 verbunden. Auf die Darstellung der Verschlussvorrichtung wurde in Fig. 1 bis 3 verzichtet. Eine detaillierte Abbildung einer Ausgestaltung wird in Fig. 4 und 5 gezeigt.

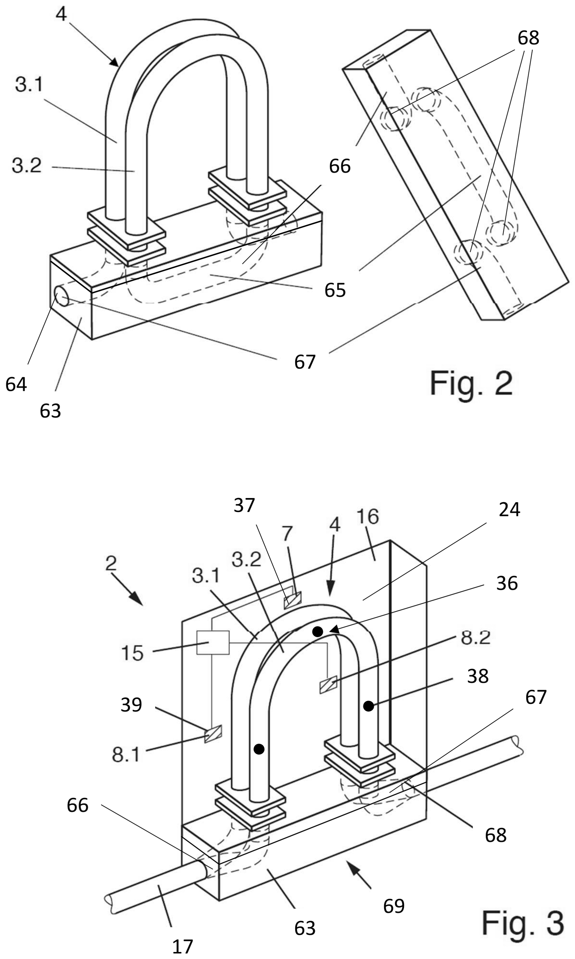

Die Fig. 2 zeigt zwei perspektivische Ansichten auf eine weitere Ausgestaltung des erfindungsgemäßen Messaufnehmers 69, insbesondere der Verbindungsvorrichtung 63. Die Messrohranordnung 4 ist im Wesentlichen identisch mit der in der Fig. 1 gezeigten Ausgestaltungen der Messrohranordnung 4. Die Verbindungsvorrichtung 63 ist massiv und quaderförmig ausgebildet. Der Einlaufkanal 66 und der Auslaufkanal 67 sind in der Verbindungsvorrichtung 63 eingearbeitet und weisen jeweils einen Bogen auf, bzw. sind L-förmig ausgebildet. Der Einlaufkanal 66 verbindet eine Messrohranschlussöffnung 68 mit einer Rohranschlussöffnung 64. Ebenso verbindet der Auslaufkanal 67 eine Messrohranschlussöffnung 68 mit einer Rohranschlussöffnung 64. Der Einlaufkanal 66 ist mit dem Einlaufabschnitt 20 des ersten Messrohres 3.1 verbunden. Der Auslaufkanal 67 ist mit dem Auslaufabschnitt 21 des ersten Messrohres 3.1 verbunden. Die Verbindungsvorrichtung 63 weist zudem einen Verbindungskanal 65 auf, welcher eine Längsachse aufweist, die mit den Längsachsen der Schenkel des zweiten Messrohres 3.2 in einer gemeinsamen Ebene liegt. Der Einlaufabschnitt 20 des zweiten Messrohres 3.2 ist über den Verbindungskanal 65 mit dem Auslaufabschnitt 21 des zweiten Messrohres 3.2 verbunden. Somit wird das zu führende Medium ausschließlich durch das erste Messrohr 3.1 geleitet.

Die Fig. 3 zeigt eine teilweise geschnittene, perspektivische Ansicht auf eine Ausgestaltung des Messgerätes 2, umfassend einen an einem Schlauch- und/oder Kunststoffrohrsystem 17 angeschlossenen Messaufnehmer 69. Wie zuvor ist die Messrohranordnung 4 des Messaufnehmers 69 identisch mit den in der Fig. 1 und Fig. 2 gezeigten Ausgestaltungen. Der Messaufnehmer 69 ist in eine Trägervorrichtung 16 eingesetzt, in welcher auch die Mess- und/oder Betriebsschaltung 15 angeordnet ist, welche mit dem Schwingungserreger 7 und den zwei Schwingungssensoren 8.1, 8.2 verbunden ist. Die Verbindungsvorrichtung 5 ist quaderförmig ausgebildet und weist einen Einlaufkanal 66 auf, der sich aufteilt und in die jeweiligen Einlaufabschnitte der beiden Messrohre 3.1, 3.2 erstreckt. Der Auslaufkanal 67 erstreckt sich ausgehend von den jeweiligen Auslauabschnitten 21 der Messrohre 3.1, 3.2 zur Rohranschlussöffnung 68.

An den Messrohren 3.1, 3.2 sind jeweils ein Erregermagnet 36 und zwei Sensormagnete 38 angeordnet, welche Komponenten des Schwingungserregers 7 und der zwei Schwingungssensoren 8.1, 8.2 sind. Der Schwingungserreger 7 umfasst eine Erregerspule 37. Die zwei Schwingungssensoren 8.1, 8.2 umfassen jeweils eine Sensorspule 39. Die Spulen 37, 39 sind alle in der Trägervorrichtung 16 angeordnet, bzw. in einer Wandung der Trägervorrichtung 16 versenkt. An den Messohren 3.1, 3.2 sind die Erregermagnete 36 und Sensormagnete 38 angeordnet. Die zwei Messrohre 3.1, 3.2 weisen jeweils eine Längsebene auf, welche gleichzeitig auch eine Spiegelebene ist. Diese jeweiligen Spiegelebenen teilen die Messrohre 3.1, 3.2 jeweils in zwei Seiten ein. An den sich abgewandten Seiten der zwei Messrohre 3.1, 3.2 sind jeweils drei Magnete angeordnet. Einer der drei Magnete ist eine Schwingungserregerkomponente und zwei der drei Magnete sind Schwingungssensorkomponenten.

Die elektronische Mess- und/oder Betriebsschaltung 15 dazu eingerichtet ist den Massedurchfluss, die Viskosität und/oder die Dichte und/oder die davon abgeleitete Größe eines fließfähigen Mediums zu ermitteln und bereitzustellen. Zudem ist die Mess-und/oder Betriebsschaltung 15 dazu ausgebildet ein Betriebssignal auf den Schwingungserreger 7 aufzubringen.

Die Fig. 4 zeigt einen Teilausschnitt eines Längsschnittes durch den erfindungsgemäßen Messaufnehmer 69. Der Messaufnehmer 69 umfasst eine Messrohranordnung 4 zum Führen des fließfähigen Mediums, eine Fixierkörperanordnung 5 und eine Verbindungsvorrichtung 63 zum lösbaren Verbinden der Messrohranordnung 4 mit einer Prozessleitung. Die Fixierkörperanordnung 5 ist mit mindestens einem Messrohr 3 im Einlaufabschnitt 20 und/oder im Auslaufabschnitt 21 verbunden und weist mindestens eine Öffnung 70 auf. Die Verbindungsvorrichtung 63 weist Messrohranschlussöffnungen 68 auf, an welche die Messrohranordnung 4 angeschlossen ist. Zudem ist die Verbindungsvorrichtung 63 mit dem mindestens einem Messrohr 3 im Einlaufabschnitt 20 und/oder im Auslaufabschnitt 21 verbunden. Die Verbindungsvorrichtung 63 weist mindestens eine Verschlussvorrichtung 71 auf, welche sich durch die Öffnung 70 der Fixierkörperanordnung 5 erstreckt und über welche die Verschlussvorrichtung 71 zumindest formschlüssig mit der Fixierkörperanordnung 5 verbunden ist. Die Fixierkörperanordnung 5 weist ein erste Seite 74 und eine zweite Seite 75 auf, wobei die erste Seite 74 und die zweite Seite 75 einander abgewandt sind. Die Öffnung 70 erstreckt sich von der ersten Seite 74 zur zweiten Seite 75. Die Verbindungsvorrichtung 63 weist eine Kontaktfläche 72 auf und die Fixierkörperanordnung 5 weist eine Berührfläche 73 an der ersten Seite 74 auf, wobei sich die Kontaktfläche 72 und die Berührfläche 73 berühren. Die Verschlussvorrichtung 71 ist derart ausgebildet, dass nach dem Einrasten der Verschlussvorrichtung 71 die Verbindungsvorrichtung 63 über die Verschlussvorrichtung 71 eine Kraft auf die Fixierkörperanordnung 5 bewirkt mit einem Kraftanteil in Richtung der zweiten Seite 75.

Die Verschlussvorrichtung 71 umfasst eine Rastnase, welche sich durch die Öffnung 70 erstreckt und mit der zweiten Seite der Fixierkörperanordnung 5 verrastet ist. Die Verschlussvorrichtung 71 ist derart ausgebildet, dass sie sich beim Durchführen durch die Öffnung 70 bis zu einem Punkt elastisch verformt und dann einrastet, um somit die formschlüssige Verbindung zu bilden.

Zwischen Verbindungsvorrichtung 63 und der zweiten Seite 75 der Fixierkörperanordnung 5 ist eine elastische Dichtung 76 - in Form eines Dichtringes - angeordnet. Die Dichtung 76 ist zwischen Verbindungsvorrichtung 63 und Fixierkörperanordnung 5 eingespannt und die Einspannung wird über den Formschluss gehalten.

Die Verbindungsvorrichtung 5 weist eine Messrohranschlussöffnung 68 auf, welche komplementär zum Einlaufabschnitt 20 eines Messrohres ausgebildet ist. Weiterhin weist die Verbindungsvorrichtung 5 eine Messrohranschlussöffnung 68 auf, welche komplementär zum Auslaufabschnitt 21 eines Messrohres ausgebildet ist. Im montierten Zustand sind der Einlaufabschnitt 20 und der Auslaufabschnitt 21 des Messrohres 3 in der jeweiligen zugeordneten Vertiefung angeordnet.

Die Fig. 5 zeigt eine Explosionsansicht einer Ausgestaltung des erfindungsgemäßen Messaufnehmers 69. Die Messrohranordnung 4 weist zwei zueinander parallel verlaufende Messrohre 3.1, 3.2 auf, welche jeweils im Einlaufabschnitt 20 einen Einlauf mit einer Einlaufrichtung und im Auslaufabschnitt 21 einen Auslauf mit einer Auslaufrichtung aufweisen. Zudem sind die zwei Messrohre 3.1, 3.2 zwischen Einlaufabschnitt 20 und Auslaufabschnitt 21 jeweils genau einmal gebogen. Dadurch ergibt sich, dass die Einlaufrichtung und die Auslaufrichtung entgegengesetzt orientiert sind. Die Fixierkörperanordnung 5 ist mit dem Einlaufabschnitt 20 und dem Auslaufabschnitt 21 der jeweiligen Messrohre 3.1, 3.2 verbunden. Die Verbindungsvorrichtung 63 weist genau zwei Verschlussvorrichtungen 71.1, 71.2 auf und die Fixierkörperanordnung 5 weist entsprechend genau zwei Öffnungen 70.1, 70.2 auf. Die Verschlussvorrichtungen sind jeweils als Rastnasen ausgebildet. In einem montierten Zustand erstrecken sich die zwei Verschlussvorrichtungen 71.1, 71.2 jeweils durch eine Öffnung 70 der zwei Öffnungen 70.1, 70.2. Dabei bewirkt die Verbindungsvorrichtung 63 über die zwei Verschlussvorrichtung 71.1, 71.2 jeweils eine Kraft auf die Fixierkörperanordnung 5 mit einem Kraftanteil in Richtung der zweiten Seite 75.

### Bezugszeichenliste

Koppleranordnung 1
Messgerät 2
Messrohr 3
Messrohranordnung 4
Fixierkörperanordnung 5
Kopplerelement 6
Schwingungserreger 7
Schwingungssensor 8
Schenkel 11
Messrohrkörper 13
Mess- und/oder Betriebsschaltung 15
Trägervorrichtung 16
Schlauch- und/oder Kunststoffrohrsystem 17
Einlaufabschnitt 20
Auslaufabschnitt 21
Aufnahme 29
Erregermagnet 36
Erregerspule 37
Sensormagnet 38
Sensorspule 39
Auswerteschaltung 53
Verbindungsvorrichtung 63
Rohranschlussöffnung 64
Verbindungskanal 65
Einlaufkanal 66
Auslaufkanal 67
Messrohranschlussöffnungen 68
Messaufnehmer 69
Öffnung 70
Verschlussvorrichtung 71
Kontaktfläche 72
Berührfläche 73
erste Seite 74
zweite Seite 75
Dichtung 76
Temperatursensor 77

## Patentansprüche

1. Messaufnehmer (69) eines Messgerätes (2) zum Erfassen eines Massedurchflusses, einer Viskosität, einer Dichte und/oder einer davon abgeleiteten Größe eines fließfähigen Mediums, umfassend:
- eine Messrohranordnung (4) zum Führen des fließfähigen Mediums,
wobei die Messrohranordnung (4) mindestens ein Messrohr (3) aufweist,
wobei das mindestens eine Messrohr (3) einen Einlaufabschnitt (20) und einen Auslaufabschnitt (21) aufweist;
- mindestens eine erste Erregerkomponente eines Schwingungserregers (7) zum Anregen des mindestens einen Messrohres (3) in Schwingungen,
wobei die mindestens eine Erregerkomponente an dem mindestens einen Messrohr (3) angeordnet ist;
- mindestens eine erste Sensorkomponente eines Schwingungssensors (8) zum Erfassen der Schwingungen des mindestens einen Messrohres (3),
wobei die mindestens eine erste Sensorkomponente an dem mindestens einen Messrohr (3) angeordnet ist;
- eine Fixierkörperanordnung (5),
wobei die Fixierkörperanordnung (5) mit dem mindestens einen Messrohr (3) im Einlaufabschnitt (20) und/oder im Auslaufabschnitt (21) verbunden ist,
wobei die Fixierkörperanordnung (5) mindestens eine Öffnung (70) aufweist; und
- eine Verbindungsvorrichtung (63) zum lösbaren Verbinden der Messrohranordnung (4) mit einer Prozessleitung,
wobei die Verbindungsvorrichtung (63) Messrohranschlussöffnungen (68) aufweist, an welche die Messrohranordnung (4) angeschlossen ist,
wobei die Verbindungsvorrichtung (63) mit dem mindestens einem Messrohr (3) im Einlaufabschnitt (20) und/oder im Auslaufabschnitt (21) verbunden ist,
wobei die Verbindungsvorrichtung (63) mindestens eine Verschlussvorrichtung (71) aufweist, welche sich durch die Öffnung (70) der Fixierkörperanordnung (5) erstreckt,
wobei die Verbindungsvorrichtung (63) über die Verschlussvorrichtung (71) zumindest formschlüssig mit der Fixierkörperanordnung (5) verbunden ist,
wobei die Verbindungsvorrichtung (63) einen Verbindungsvorrichtungskörper aufweist,
**dadurch gekennzeichnet, dass** die Verbindungsvorrichtungskörper einen Kunststoff, bevorzugt Polyetheretherketone (PEEK), Polyaryletherketone (PAEK), Polyphenylsulfone (PPSU), Polyethersulfone (PESU), Polysulfone (PSU), Polyarylamide (PARA), Polypropylene (PP), Polycarbonate (PC), Polyethylene (PE), Fluoropolymere und/oder Hart-Polyethylene (HDPE), aufweist,
wobei die Messrohranordnung (4) einen Messrohranordnungskörper aufweist,
wobei der Messrohranordnungskörper Stahl aufweist.

2. Messaufnehmer (69) nach Anspruch 1,
wobei die Fixierkörperanordnung (5) ein erste Seite (74) und eine zweite Seite (75) aufweist,
wobei die erste Seite (74) und die zweite Seite (75) einander abgewandt sind,
wobei sich die Öffnung (70) von der ersten Seite (74) zur zweiten Seite (75) erstreckt,
wobei die Verbindungsvorrichtung (63) eine Kontaktfläche (72) aufweist,
wobei die Fixierkörperanordnung (5) an der ersten Seite (74) eine Berührfläche (73) aufweist,
wobei sich die Kontaktfläche (72) und die Berührfläche (73) berühren,
wobei die Verbindungsvorrichtung (63) über die Verschlussvorrichtung (71) eine Kraft auf die Fixierkörperanordnung (5) bewirkt mit einem Kraftanteil in Richtung der zweiten Seite (75).

3. Messaufnehmer (69) nach Anspruch 1 und/oder 2,
wobei die Verschlussvorrichtung (71) eine Rastnase umfasst.

4. Messaufnehmer (69) nach mindestens einem der vorhergehenden Ansprüche,
wobei zwischen Verbindungsvorrichtung (63) und der zweiten Seite (75) der Fixierkörperanordnung (5) eine, insbesondere elastische Dichtung (76) angeordnet ist,
wobei die Dichtung (76) zwischen Verbindungsvorrichtung (63) und Fixierkörperanordnung (5) eingespannt ist und die Einspannung über den Formschluss gehalten wird.

5. Messaufnehmer (69) nach mindestens einem der vorhergehenden Ansprüche,
wobei die Verbindungsvorrichtung (63) zwei Verschlussvorrichtungen (71.1, 71.2) aufweist,
wobei die Fixierkörperanordnung (5) zwei Öffnungen (70.1, 70.2) aufweist,
wobei die zwei Verschlussvorrichtungen (71.1, 71.2) jeweils durch eine Öffnung (70) der zwei Öffnungen (70.1, 70.2) erstrecken,
wobei die Verbindungsvorrichtung (63) über die zwei Verschlussvorrichtung (71.1, 71.2) jeweils eine Kraft auf die Fixierkörperanordnung (5) bewirkt mit einem Kraftanteil in Richtung der zweiten Seite (75).

6. Messaufnehmer (69) nach einem der Ansprüche 1 bis 5,
wobei die Messrohranordnung (4) zwei insbesondere zueinander parallel verlaufende Messrohre (3.1, 3.2) aufweist,
wobei die zwei Messrohr (3.1, 3.2) jeweils im Einlaufabschnitt (20) einen Einlauf mit einer Einlaufrichtung und im Auslaufabschnitt (21) einen Auslauf mit einer Auslaufrichtung aufweisen,
wobei die zwei Messrohre (3.1, 3.2) zwischen Einlaufabschnitt (20) und Auslaufabschnitt (21) jeweils mindestens einmal, insbesondere genau einmal gebogen sind,
wobei die Einlaufrichtung und die Auslaufrichtung entgegengesetzt orientiert sind,
wobei die Fixierkörperanordnung (5) mit dem Einlaufabschnitt (20) und dem Auslaufabschnitt (21) der jeweiligen Messrohre (3.1, 3.2) verbunden ist.

7. Messaufnehmer (69) nach Anspruch 6,
wobei die Verbindungsvorrichtung (5) einen Einlaufkanal (10) aufweist,
wobei der Einlaufkanal (10) dazu ausgebildet ist, mindestens einen Einlaufabschnitt (20) und bevorzugt die Einläufabschnitte (20) aller Messrohre (3.1, 3.2) mit der Prozessleitung (22) zu verbinden,
wobei die Verbindungsvorrichtung (5) einen Auslaufkanal (11) aufweist,
wobei der Auslaufkanal (11) dazu ausgebildet ist, mindestens einen Auslaufabschnitt (21) und bevorzugt die Auslaufabschnitte (21) aller Messrohre (3.1, 3.2) mit der Prozessleitung (22) zu verbinden.

8. Messaufnehmer (69) nach Anspruch 6 und/oder 7,
wobei die Verbindungsvorrichtung (5) einen Verbindungskanal (12) aufweist, welcher den Einlaufabschnitt (20) eines ersten Messrohres (3.1) mit dem Auslaufabschnitt (21) eines zweiten Messrohres (3.2) verbindet.

9. Messaufnehmer (69) nach Anspruch 6 und/oder 7,
wobei die Verbindungsvorrichtung (5) einen Verbindungskanal (12) aufweist, welcher den Einlaufabschnitt (20) eines der zwei Messrohre (3.1, 3.2) mit dem zum Messrohr (3) gehörigen Auslaufabschnitt (21) verbindet.

10. Messaufnehmer (69) nach Anspruch 6 und/oder 7,
wobei die Verbindungsvorrichtung (5) eine erste Vertiefung aufweist, welche komplementär zum Einlaufabschnitt (20) eines der zwei Messrohre (3.1, 3.2) ausgebildet ist,
wobei die Verbindungsvorrichtung (5) eine zweite Vertiefung aufweist, welche komplementär zum Auslaufabschnitt (21) eines der zwei Messrohre (3.1, 3.2) ausgebildet ist,
wobei der Einlaufabschnitt (20) und der Auslaufabschnitt (21) eines der zwei Messrohre (3.1, 3.2) in der jeweiligen zugeordneten Vertiefung angeordnet sind.

11. Messaufnehmer (69) nach mindestens einem der vorhergehenden Ansprüche,
wobei die Messrohranordnung (4) genau zwei Messrohre (3.1, 3.2) umfasst.

12. Messgerät (2) zum Erfassen eines Massedurchflusses, einer Viskosität, einer Dichte und/oder einer davon abgeleiteten Größe eines fließfähigen Mediums, umfassend:
- eine Trägervorrichtung (16);
- einen Messaufnehmer (69) nach mindestens einem der vorhergehenden Ansprüche;
- mindestens eine zweite Erregerkomponenten des Schwingungserregers (7); und
- mindestens eine zweite Sensorkomponente des Schwingungssensors (8);
wobei die Trägervorrichtung (16) einen Trägervorrichtungskörper mit einer Aufnahme (29) aufweist,
wobei der Messaufnehmer (69) in der Aufnahme (29) angeordnet und mechanisch trennbar mit dem Trägervorrichtungskörper verbunden ist;
wobei die zweite Erregerkomponente an dem Trägervorrichtungskörper angeordnet ist,
wobei die zweite Sensorkomponente an dem Trägervorrichtungskörper angeordnet ist,
wobei der Schwingungserreger (7) eine Betriebsschaltung (15) umfasst, welche mit zumindest einer Erregerkomponente, insbesondere der zweiten Erregerkomponente des Schwingungserregers (7) verbunden ist,
wobei der Schwingungssensor (8) eine Messschaltung (15) umfasst, welche zumindest mit einer Sensorkomponente, insbesondere der zweiten Sensorkomponente des Schwingungssensors (8) elektrisch verbunden ist.
